# EUROPEAN PATENT APPLICATION

(11) **EP 3 334 097 A1**
(43) Date of publication of application: **13.06.2018**
(21) Application number: 16203006.8
(22) Date of filing: 08.12.2016
(51) Int. Cl.: H04L 12/46

(54) **METHOD, COMMUNICATION WEB SERVICE, AND SERVER FOR PROVIDING NETWORK COMMUNICATION BETWEEN BACNET DEVICES**

(71) Applicant: Siemens Schweiz AG, 8047 Zürich (CH)
(72) Inventor: Brun, Gerhard, 6006 Luzern (CH); Isler, Bernhard, 8832 Wilen b. Wollerau (CH); Sigrist, Ralph, 6312 Steinhausen (CH)
(74) Representative: Maier, Daniel Oliver

(57) **Abstract**

Method and communication web service for providing secure communication service for BACnet devices via Internet, wherein the communication web service CCL acts as hub and switch and is configured to be accessed by BACnet devices via a respective outbound HTTPS connection to a pre-defined URL, and wherein the communication between the communication web service CCL and the BACnet devices is based on BACnet via the "BACnet Cloud Link" (BCL) protocol over the WebSocket protocol.

## Description

### FIELD OF THE INVENTION

The present invention relates generally to the technical field of building management systems or building automation systems comprising a plurality of building devices, e.g. BACnet devices. In particular the present invention relates to a method, a communication web service, and a server for providing network communication between BACnet devices via the Internet.

### BACKGROUND

A building automation system is an arrangement for monitoring, open-loop control, and/or closed-loop control of process variables in complex technical systems in a building, or in a campus comprising a number of buildings. A building automation system typically operates heating, ventilation and air-conditioning systems, lighting and shading devices and also access control, security and fire surveillance systems. In the building automation system, process variables - such as room air conditioning variables or events, for example - are detected, evaluated, monitored, influenced or generated, with the energy consumption of the building or campus also advantageously being optimized by the building automation system.

Generally, a building automation system encompasses and operates a plurality of field devices, e.g. implemented as BACnet devices, such as sensors and actuators. Examples of typical field devices are temperature and humidity sensors, air quality sensors, pressure sensors, flow meters, electricity meters, heat meters, brightness sensors, fire alarms, intrusion alarms, alarm or sprinkler devices, drives for hot water valves, thermostat valves, ventilation flaps or blinds, light switches, smart card readers or devices for detecting biometric data. The building automation system typically comprises a plurality of software modules, processes or programs, and in general, a number of computers or processors for their activation and also as a rule a plurality of open-loop and closed-loop control devices as well as further devices, for example devices for linking the building automation system to external communication networks and graphical user interfaces having screens for viewing and analysis of captured signals, video and data from monitored and/or controlled points or elements within the building automation system.

BACnet is a communications protocol for building automation and control networks. It is an ASHRAE, ANSI, and ISO 16484-5 standard protocol. BACnet allows communication of building automation and control systems for applications such as heating, ventilating, and air-conditioning control (HVAC), fire and security systems, energy management, lighting control, physical access control, and elevator monitoring systems including their associated equipment. The BACnet protocol provides mechanisms for computerized building automation devices to exchange information, regardless of the particular building service they perform (see Definition in Wikipedia).

A BACnet device implements the BACnet protocol through which the device can communicate. For connection to the network, a BACnet device implements at least one of the datalink and physical layer options defined for BACnet, with BACnet over IP being the dominant standard option today. The information accessible through this protocol is formatted as BACnet objects. The set of standard and proprietary BACnet objects in a BACnet device represents the functionality of that device. BACnet devices may be sensors, actuators, controllers, and also workstations.

A BACnet network is set of BACnet devices that interconnect to each other using one of the datalink and physical layer options defined for BACnet. All connected BACnet devices of a BACnet network can communicate to each other in a peer-to-peer fashion. Multiple BACnet networks maybe interconnected using BACnet Routers, allowing BACnet devices to communicate with other BACnet devices on other BACnet networks that may use a different datalink and physical layer option even.

Often there is a need that BACnet devices assigned to different and distant BACnet networks have to communicate. Furthermore in building automation, various BACnet based software tools are used for engineering, configuration, maintenance, browsing data, optimizations, data archiving, etc. These tools (e.g. engineering tools) were designed to be used within the same network as the devices. To save travel costs and reaction time, secured and controlled remote access to the sites (e.g. buildings) where the BACnet devices are physically installed is desired.

Remote tool access today is accomplished by introducing a virtual private network (VPN) connection from the engineering office (where the tools are located) to the site (building, where the respective BACnet devices are located). VPN connections between BACnet devices located in different networks require special Hardware installation on site for VPN router and a dedicated firewall configuration to allow inbound traffic on VPN ports. Furthermore multiple VPN connections must be initiated to provide access to various sites.

### SUMMARY OF THE INVENTION

The object of the invention is to provide an easy to install and easy to use communication service between BACnet devices located in different BACnet networks.

This object will be achieved by a method for providing network communication between BACnet devices via the Internet, the method comprising:
- initiating an outbound HTTPS connection to a pre-defined URL locating a communication web service (CCL), by a building automation BACnet device; wherein said building automation BACnet device is a node of a local building automation network, and wherein said building automation BACnet device is acting as a gateway device for further BACnet devices of said local building automation network;
- initiating an outbound HTTPS connection to the pre-defined URL locating the communication web service (CCL), by a BACnet tool (e.g. an engineering tool).

The object will be furthermore achieved by a communication web service (CCL) for providing communication service for BACnet devices via Internet, wherein the communication web service (CCL) is configured to be accessed by BACnet devices via a respective outbound HTTPS connection to a pre-defined URL, and wherein the communication between the communication web service (CCL) and the BACnet devices is based on BACnet via the "BACnet Cloud Link" (BCL) protocol over the WebSocket protocol.

The object will be also achieved by a server, configured to host a communication web service (CCL) for providing communication service for BACnet devices via Internet, wherein the communication web service (CCL) is configured to be accessed by BACnet devices via a respective outbound HTTPS connection to a pre-defined URL, and wherein the communication between the communication web service (CCL) and the BACnet devices is based on BACnet via the "BACnet Cloud Link" (BCL) protocol over the WebSocket protocol.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: illustrates a known VPN communication mechanism between BACnet devices located in different networks;
- FIG 2: illustrates a first exemplary communication scenario between BACnet devices located in different net-works using a communication web service (CCL);
- FIG 3: illustrates a second exemplary communication scenario between BACnet devices located in different networks using a communication web service (CCL);
- FIG 4: illustrates an exemplary flow chart for a method for providing network communication between BACnet devices via the Internet; and
- FIG 5: illustrates an exemplary server, configured to host a communication web service (CCL) for providing communication service for BACnet devices via Internet.

### DETAILED DESCRIPTION

Today building automation objects or field devices of a building automation system are widely dispersed throughout a facility or even in different facilities. For example, an HVAC system includes temperature sensors and ventilation damper controls as well as other elements that are located in virtually every area of a facility. Similarly, a security system may have intrusion detection, motion sensors and alarm actuators dispersed throughout an entire building or campus.

Likewise, fire safety systems include smoke alarms and pull stations dispersed throughout the facility. To achieve efficient and effective building automation system operation, there is a need to monitor the operation of, and often communicate with, the various dispersed building automation objects or field devices of a building automation system.

Electrical or wireless communication media are used in a building automation system for the exchange of data of individual devices or parts of systems, as a rule a number of communication networks exist, with cables, optical data communication channels, ultrasound connections, electromagnetic near field or radio networks able to be used, including fiber optic networks or cellular networks for example. Examples of technologies or standards able to be used for the said data exchange are BACnet, LON from the company ECHELON, KNX, ZigBee or PROFIBUS defined by German standard DIN 19245. BACnet refers to the ANSI/ASHRAE 135-2016 building communication protocol standard, titled "BACnet, A Data Communication Protocol for Building Automation and Control Networks" (2016).

Building automation systems typically have one or more control stations in which data from each of the dispersed building automation objects or field devices in the system may be monitored and in which various aspects of system operation may be controlled and/or monitored. The control station typically includes a computer having processing equipment, data storage equipment, and sometimes a user interface. To allow for monitoring and control of the dispersed building automation objects or field devices, building automation systems often employ multi-level communication networks to communicate operational and/or alarm information between operating elements, such as sensors and actuators, and the control stations.

One example of a building automation system control station is the APOGEE® INSIGHT® Workstation, available from Siemens Industry, Inc. of Buffalo Grove, Ill., which may be used with the model APOGEE® building automation system, also available from Siemens Industry, Inc. (APOGEE and INSIGHT are U.S federally registered trademarks of Siemens Industry, Inc.) In this system, several control stations, connected via an Ethernet or other type of network, may be distributed throughout one or more building locations, each having the ability to monitor and control system operation. As a consequence, different people in different locations of the facility may monitor and control building operations.

There is a need that building automation objects or field devices of a building automation system which are located in different networks can communicate. Furthermore there is a need that software based tools for e.g. engineering, configuration, maintenance, browsing data, optimizations, or data archiving of building automation objects or field devices have remote access to the respective objects or devices.

Remote tool access today is normally accomplished by using a virtual private network (VPN) connection from the engineering office to the site (building).

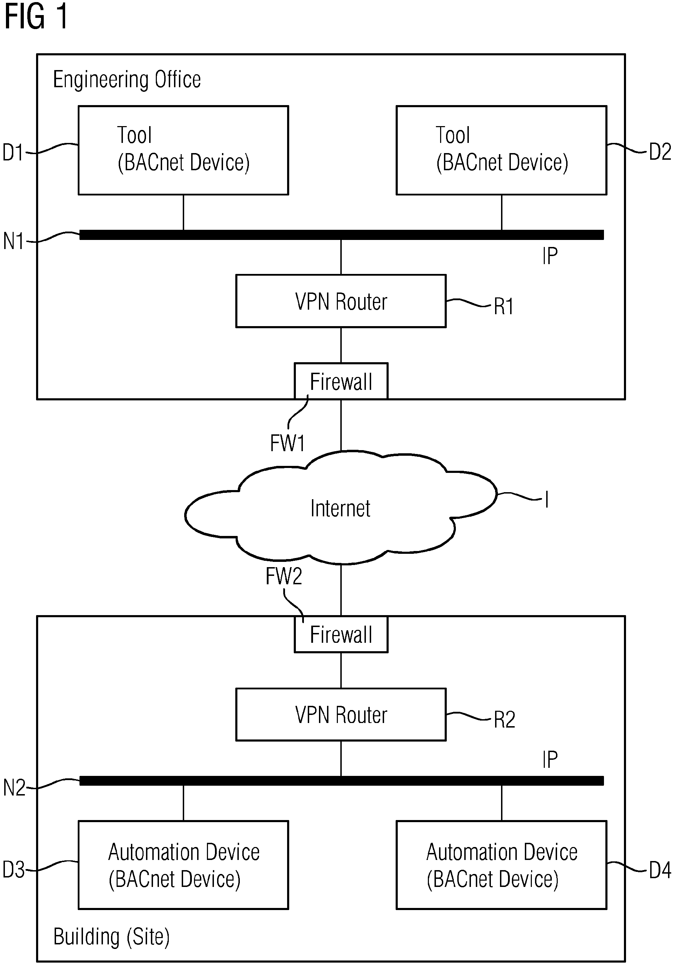

Figure 1 illustrates a known VPN communication mechanism between BACnet devices located in different networks. In Figure 1 the tools D1 and D2 are nodes of network N1 and realized as BACnet devices, e.g. capable of engineering, configuration, maintenance, browsing data, optimizations, or data archiving of automation devices D3, D4 which are also realized as BACnet devices. In Figure 1 the automation devices D3, D4 are nodes of network N2. The networks N1, N2 are realized as IP networks using the Internet Protocol (IP). According the illustration in figure 1 the network N1 comprising the tools D1, D2 is located in an engineering office, and the network N2 comprising the automation devices D3, D4 is located in a building (site). Each of the networks N1, N2 has a respective VPN router R1, R2 and a respective firewall FW1, FW2 for a communication via Internet (I).

The solution with VPN mechanism has the following drawbacks:
- Special HW Installation on site required for VPN Router. This is increasing HW-costs.
- Device configuration required. This means higher installation efforts.
- Firewall configuration required to allow inbound traffic on VPN port.
- A VPN mechanism provides access to the whole network in a building. This can be a security issue.
- Multiple VPN connections must be initiated to access various sites.
- Respective firewalls must be configured on either engineering office or building site to enable VPN connection.

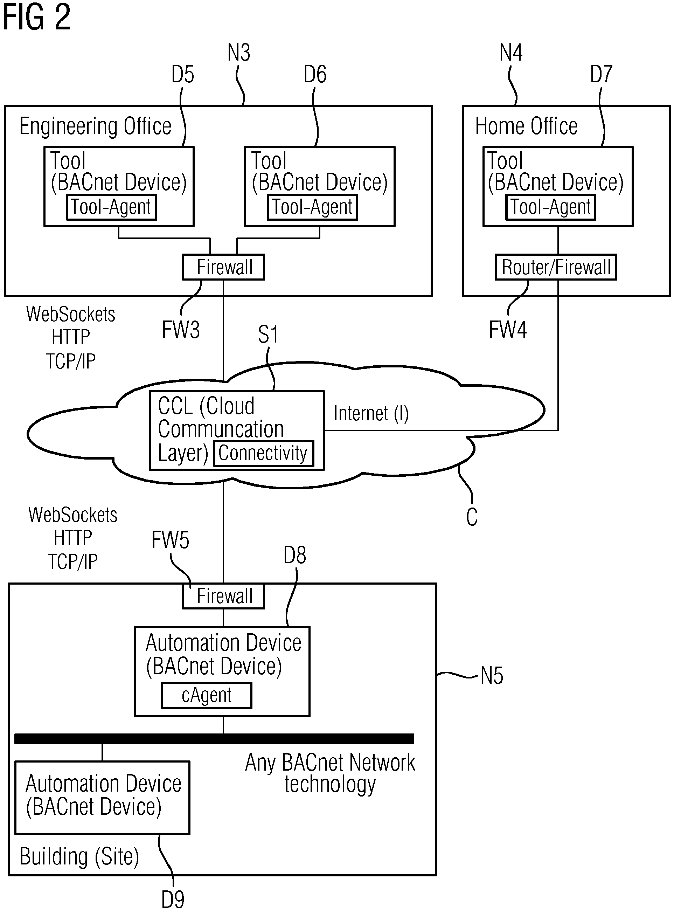

Figure 2 illustrates a first exemplary communication scenario between BACnet devices located in different networks N3 - N5 using a communication web service CCL. The communication web service CCL (Cloud Communication Layer) provides communication service for BACnet devices via the Internet. The communication web service CCL is implemented by using one or more servers S1. Advantageously the one or more servers S1 are implemented in a cloud infrastructure C. The communication web service CCL is configured to be accessed by BACnet devices D5 - D9 via a respective outbound HTTPS connection to a pre-defined URL. The communication between the communication web service CCL and the BACnet devices D5 - D9 is based on BACnet via the "BACnet Cloud Link" (BCL) protocol over the WebSocket protocol. The WebSocket protocol is a communication protocol between computers or computerized devices and provides a bidirectional, even a full-duplex, communication based on a TCP (Transmission Control Protocol) or TLS (Transport Layer Security) connection.

WebSocket is a computer communications protocol, providing full-duplex communication channels over a single TCP connection. The WebSocket protocol was standardized by the IETF as RFC 6455 in 2011, and the WebSocket API in Web IDL is being standardized by the W3C. WebSocket is designed to be implemented in web browsers and web servers, but it can be used by any client or server application (Wikipedia).

Advantageously the communication web service CCL is hosted on one or more servers S1 outside of the BACnet devices D5 - D9. Advantageously the one or more servers S1 hosting the communication web service CCL and providing this communication service to BACnet devices are implemented in a cloud computing infrastructure, especially in a distributed system. The BACnet devices D5 - D9 can be tools or automation devices. The tools can be used e.g. for engineering or configuring the BACnet automation devices. On building sites BACnet automation devices are used e.g. for controlling HVAC functionality. The BACnet tools can be located in a remote engineering office or a home office. These tools have remote access to the BACnet automation devices via the communication web service CCL.

The firewalls FW3 - FW5 need only to be configured to let outbound connection establishment (out of one of the networks N3 - N5) pass. The firewalls FW3 - FW5 require no configuration for inbound connection establishment (into one of the networks N3 - N5).

Advantageously the communication web service CCL is based on in-memory data grid frameworks and/or on persistency frameworks. An in-memory data base uses primarily the main memory (RAM, random access memory; especially non-volatile RAM) of a computer system for data storage. This allows fast data access times. A data grid framework or a data grid architecture makes it possible to have access to geographically distributed data, even scattered over different networks. An in-memory data grid framework can be used be used for distributed data storage or distributed data processing.

In computer technology a persistency (or persistence) framework supports and automates storing of data. For example a persistence framework moves data to and from a permanent data storage. Normally a persistency (or persistence) framework is realized as middleware software.

Advantageously one of the BACnet devices D8, D9 is a building automation BACnet device D8, D9 and is a node of a local building automation network N5, and said building automation BACnet device is configured to be acting as a gateway device for further BACnet devices of the local building automation network N5. In figure 2 the network N5 is located on a building site (e.g. a residential building or a campus) and the automation BACnet device D8 is acting as a gateway to the Internet I. Via this gateway further BACnet devices D9 of the network N5 have access to the communication web service CCL. The communication web service CCL is acting as a communication mechanism to provide communication between BACnet devices located in different networks.

Advantageously the communication web service CCL provides communication services for more than one local building automation networks N3 - N5, wherein in each of the local building automation networks N3 - N5 one of the building automation BACnet devices D5 - D9 is configured to be acting as a gateway device for further BACnet devices of the respective local building automation network N3 - N5. So it is possible that the communication web service CCL provides communication between different network topologies.

Advantageously the communication web service CCL is configured to be accessed by a BACnet tool D5 - D7 (e.g. engineering tool) via a respective outbound HTTPS connection to the pre-defined URL locating or hosting the communication web service CCL to be used, wherein the communication between the communication web service CCL and the BACnet tool D5 - D7 is based on BACnet via the "BACnet Cloud Link" (BCL) protocol over the websocket protocol. The BACnet tools D5 - D7 can be located in different networks N3, N4.

Advantageously the communication between any of the building automation BACnet devices D8, D9 on the local building automation network N5 and a BACnet tool D5 - D7 is provided and controlled by the communication web service CCL, and is based on BACnet via the "BACnet Cloud Link" (BCL) protocol over the Websocket protocol. This enables that a tool D5 - D7 can be connected via the communication web service CCL to BACnet automation devices D8, D9. The communication web service CCL controls this communication, for instance based on lists of access rights. Therefore the communication web service CCL controls which BACnet tool D5 - D7 has access to which local BACnet network and in each case to which BACnet automation device D8, D9.

Advantageously the communication web service CCL is configured to maintain a list of access rights that define which users have access to which building automation network and building automation device. Different levels of access can be assigned to different users or user groups.

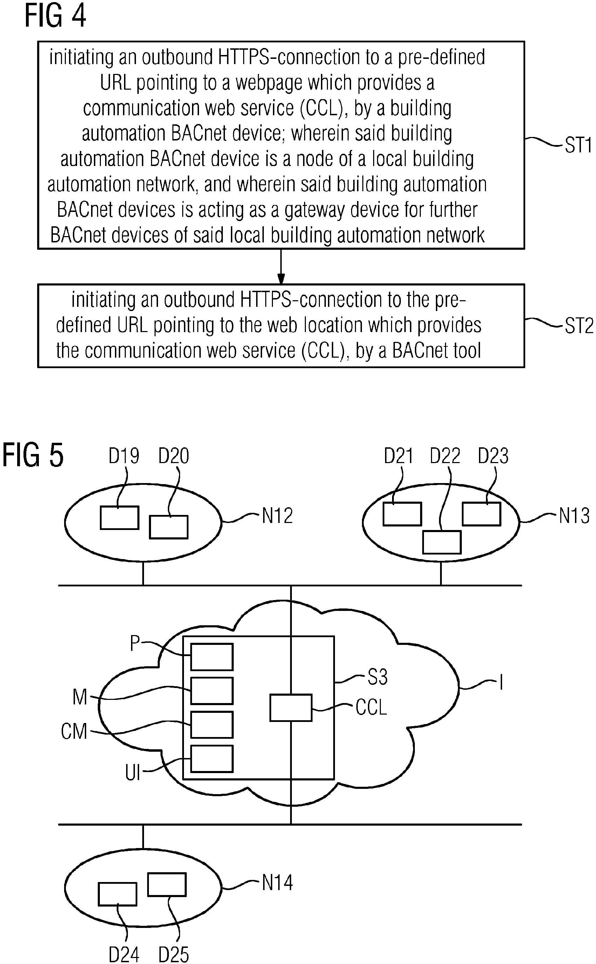

Advantageously the communication web service CCL provides a web-based user interface (UI, see figure 5) to manage the access rights by a user. For example an authorized user can manage the access rights via a web browser based UI.

The communication web service CCL is realized as a software service that is hosted on one or more servers S1 outside of the participating components. This means that the BACnet devices D5 - D9 are not used to implement the communication web service CCL. From both the site and engineering office respectively home office, outbound WebSocket connections are used only. A building automation device D8, D9 in a local building automation network N5 initiates an outbound HTTPS connection to a pre-defined URL that locates or hosts the CCL service. This device then acts as a gateway device to all BACnet devices D8, D9 on the local building automation network N5. No special firewall rules are required since standard firewalls FW3 - FW5 are configured to let outbound HTTP(S) traffic pass.

BACnet tools D5 - D7 (e.g. for engineering) initiate an outbound HTTPS connection to the same CCL service. A tool user can operate from any place as long as he has got access to the Internet I and the correct CCL service in it.

Advantageously the communication web service CCL maintains a list of access rights that define what tool users have access to which building automation network. This list of access rights can be managed by a web user interface or by other means of the web service CCL (Cloud Communication Layer). If the user is granted access to the local building automation network the communication web service CCL is establishing a connection between the BACnet tool and the gateway device. If the connection is established, the CCL web service provides access to the whole local building automation network N5. Since all gateway devices initiate the connection to the CCL web service, they are permanently connected and keep up their connection as long as they are connected to the Internet I. There is no need for a special inbound firewall rule that would expose any server ports of the local building automation network N5.

The actual communication between a BACnet tool D5 - D7 and the web service CCL, and between the web service CCL and the gateway building automation device D8, is based on BACnet via the "BACnet Cloud Link" (BCL) datalink and underlying WebSocket transport layer (RFC 6455). The web service CCL acts as a hub/switch at the BACnet datalink layer, and does not need BACnet routing as of the BACnet network layer. The BACnet application layer communication for any BACnet device or BACnet tool is equal to the communication as if the tools and the devices were part of the same network or connected over a VPN connection (virtual private network).

The web service CCL (Cloud Communication Layer) especially saves travel costs and reaction time. Furthermore the web service CCL provides secured and controlled remote access to the sites.

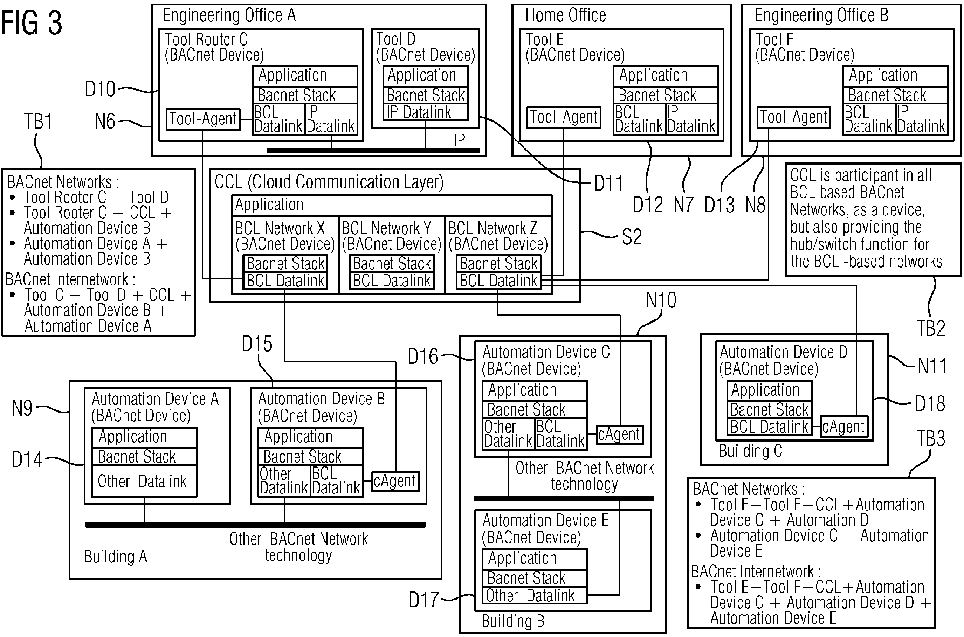

Figure 3 illustrates a second exemplary communication scenario between BACnet devices D10 - D18 located in different networks N6 - N11 using a communication web service CCL. The CCL web service is a participant in several logically separated BACnet networks for which the BCL datalink (BACnet Cloud Link) implementation in the web service CCL provides hub and switch functionality respectively.

In the exemplary illustration according to figure 3,
- the network N6 comprises the BACnet devices D10 and D11; the BACnet device D10 is a simple BACnet router, the BACnet devices D11 is a tool which does not support the BCL datalink directly (e.g. a BACnet tool for engineering or configuring BACnet automation devices);
- the network N7 comprises the BACnet device D12 (an exemplary BACnet tool which supports the BCL datalink directly);
- the network N8 comprises the BACnet device D13 (an exemplary BACnet tool which supports the BCL datalink directly);
- the network N9 comprises the BACnet devices D14 and D15, both exemplary BACnet automation devices, where D15 acts as the BACnet router supporting the BCL datalink and providing the connection to the CCL;
- the network N10 comprises the BACnet devices D16 and D17, both exemplary BACnet automation devices, where D16 acts as the BACnet router supporting the BCL datalink and providing the connection to the CCL;
- the network N11 comprises the BACnet device D18 (an exemplary BACnet automation device which supports the BCL datalink directly).

In the communication scenario according to figure 3, the BACnet devices D10, D15, and D16 are acting as gateways for the respective networks N6, N9, and N10. Devices D12, D13, and D18 connect directly to the communication web service CCL, and do not act as gateways for other devices on their respective networks N7, N8, and N11. The communication web service CCL which provides hub and switch functionality so that BACnet devices located in different networks can interact is implemented by the one or more server S2. Advantageously the one or more server S2 are implemented in a cloud infrastructure so that the communication web service CCL can be provided as SaaS (Software as a Service) or as PaaS (Platform as a Service).

Further explanations regarding the scenario illustrated in figure 3 provide the text boxes TB1 - TB3.

### Text Box TB1:

### BACnet Networks:

- Tool Router C + Tool D
- Tool Router C + CCL + Automation Device B
- Automation Device A + Automation Device B

### BACnet Internetwork:

• Tool Router C + Tool D + CCL + Automation Device B + Automation Device A

### Text Box TB2:

CCL can be participant in all BCL based BACnet Networks, as a device, but providing the hub and switch function for all BCL based BACnet networks.

### Text Box TB3:

### BACnet Networks:

- Tool E + Tool F + CCL + Automation Device C + Automation Device D
- Automation Device C + Automation Device E

### BACnet Internetwork:

- Tool E + Tool F + CCL + Automation Device C + Automation Device D + Automation Device E

Advantageously the CCL service software is implemented to make use of distributed in-memory data grid frameworks and persistency frameworks that are used in typical cloud computing environments. This allows scaling of the CCL service solution if the number of connected devices or tool connections exceeds the memory or computing power of a single server respectively node.

An advantage of the CCL service is, that it is not limited to interlink tools and building automation devices. It can also be used to establish connections between building automation devices, i.e. enhance an existing network of devices that are geographically disconnected (e.g. building B and building C). Figure 4 illustrates an exemplary flow chart for a method for providing network communication between BACnet devices via the Internet. The method comprises the steps:
(ST1) initiating an outbound HTTPS-connection to a pre-defined URL locating a communication web service (CCL), by a building automation BACnet device; wherein said building automation BACnet device is a node of a local building automation network, and wherein said building automation BACnet device is acting as a gateway device for further BACnet devices of said local building automation network;
(ST2) initiating an outbound HTTPS-connection to the pre-defined URL locating the communication web service (CCL), by a BACnet tool (e.g. engineering tool).

Advantageously the communication web service CCL provides communication services for further local building automation networks. The communication web service (CCL) can provide hub and switch functionality between the participating networks.

Advantageously the communication web service CCL is hosted on one or more servers outside of the participating networks. The communication web service CCL can be implemented independently of the networks and the BACnet devices within the networks.

Advantageously the communication web service CCL is based on in-memory data grid frameworks and persistency frameworks. This allows a scalability of the communication web service (CCL) regarding the number of networks or BACnet devices to be connected and managed by the communication web service (CCL).

Advantageously the communication between the building automation BACnet device acting as a gateway device and the communication web service CCL, as well as the communication between the communication web service CCL and the BACnet tool (e.g. engineering tool) is based on BACnet via the "BACnet Cloud Link" (BCL) protocol over the secured WebSocket protocol ("WebSocket protocol, RFC 6455", IETF Standard). This means that the communication web service CCL is based on a standardized and secure protocol.

Advantageously the communication between any of the building automation BACnet devices on the local building automation network and the BACnet tool is provided and controlled by the communication web service CCL, through its hub and switch functionality. This enables that a BACnet tool (e.g. Engineering-tool) can be connected via the communication web service CCL and Internet connection to BACnet automation devices. The communication web service CCL controls this communication, for instance based on lists of access rights. Therefore the communication web service CCL controls which BACnet tool has access to which local BACnet network and in each case to which BACnet automation device.

Advantageously the communication web service CCL maintains a list of access rights that define which devices and users have access to which building automation network. This allows that different levels of access can be assigned to different users or user groups.

Advantageously the list of access rights is managed by a web-based user interface. This enables an authorized user to manage the access rights via a commercially available web browser.

The communication web service CCL can be realized as a software service that is hosted on one or more servers outside of the participating components. This means that the BACnet devices to be connected are not required to implement the communication web service CCL.

Figure 5 illustrates an exemplary server S3, configured to host a communication web service CCL for providing communication service for BACnet devices D19 - D25 via Internet I, wherein the communication web service CCL is configured to be accessed by the BACnet devices D19 - D25 via a respective outbound HTTPS connection to a pre-defined URL, and wherein the communication between the communication web service CCL and the BACnet devices is based on BACnet via the "BACnet Cloud Link" (BCL) protocol over the WebSocket protocol. The exemplary server S3 comprises a processor P, a memory M, communication means CM, and a user interface UI. Advantageously the server S3 is implemented in a cloud infrastructure. For providing the communication web service CCL also more than one server S3 can be used.

The communication web service CCL provides the URL (Uniform Resource Locator) which locates the service CCL that can be accessed by the BACnet devices D19 - D25. The BACnet devices D19 - D25 can be BACnet tools (e.g. engineering tools) or BACnet automation devices. Advantageously the BACnet automation devices are configured to control HVAC and other domain functionality in buildings. The BACnet devices D19 - D25 can be located in different networks N12 - N14.

The invention (method, web service, server) provides especially the following advantages:
- No additional hardware installation required to allow VPN connection.
- No network or firewall configuration required (only outbound connections on standard HTTPS port).
- Advantageously access is granted based on a user rights scheme (access list maintained in CCL).
- Centralized management of user access rights (access list maintained in CCL).
- Any BACnet network technology can be used within site networks (no restriction to IP).
- Access from tool can be provided from any location, where Internet is available (only outbound connections on standard HTTPS port required).
- BACnet tools are not required to support the BCL. Simple BACnet routing to BCL, possible even on the host that also runs the tool application, allows legacy BACnet tools that do not even support the BCL, to connect to the site via the CCL.
- Reduced complexity of the setup leads to less training effort for installation and configuration engineers, which are normally no computer network experts. This means cost savings.
- Reduced complexity of the setup leads to less errors or wrong configurations. This means less field support tickets.
- No firewall rule changes and no additional network hardware imply better customer acceptance and better compliance with IT security policies. This holds also for projects in security sensitive areas.
- In case of field issues it is possible to instantly change the access rights to building automation devices, at a central place in the CCL. This is required if the person that normally maintains the device is not available in the critical moment. This implies faster resolution of problems and a good reputation at the customer.

Method and communication web service for providing secure communication service for BACnet devices via Internet, wherein the communication web service CCL acts as hub and switch and is configured to be accessed by BACnet devices via a respective outbound HTTPS connection to a pre-defined URL, and wherein the communication between the communication web service CCL and the BACnet devices is based on BACnet via the "BACnet Cloud Link" (BCL) protocol over the WebSocket protocol.

### Reference Signs

- N1 - N14: Network
- D1 - D25: BACnet Device
- S1 - S3: Server
- P: Processor
- M: Memory
- CM: Communication Means
- IO: Input/Output Means
- CCL: Cloud Communication Layer
- C: Cloud
- I: Internet
- IP: Internet Protocol
- TB1 - TB3: Text Box
- FW1 - FW5: Firewall
- ST1 - ST2: Step

## Claims

1. A method for providing network communication between BACnet devices (D1 - D25) via the Internet (I), the method comprising:
initiating an outbound HTTPS connection to a pre-defined URL locating a communication web service (CCL), by a building automation BACnet device (D1 - D25); wherein said building automation BACnet device (D1 - D25) is a node of a local building automation network (N1 - N14), and wherein said building automation BACnet device (D1 - D25) is acting as a gateway device (D8, D15, D16, D18) for further BACnet devices (D1 - D25) of said local building automation network (N1 - N14);
initiating an outbound HTTPS connection to the pre-defined URL locating the communication web service (CCL), by a BACnet tool (D5, D6, D7,D10, D1, D12, D13).

2. The method of claim 1, wherein the communication web service (CCL) provides communication services for further local building automation networks (N1 - N14).

3. The method according to one of the preceding claims, wherein the communication web service (CCL) is hosted on one or more servers (S1 - S3) outside of the participating components.

4. The method according to one of the preceding claims, wherein the communication web service (CCL) is hosted as a cloud service.

5. The method according to one of the preceding claims, wherein the communication between the building automation BACnet device (D1 - D25) acting as a gateway device (D8, D15, D16, D18) and the communication web service (CCL), as well as the communication between the communication web service (CCL) and the BACnet tool is based on BACnet via a BACnet Cloud Link (BCL) protocol over a WebSocket protocol, forming a BACnet network.

6. The method according to one of the preceding claims, wherein the communication between any of the building automation BACnet devices (D1 - D25) on the local building automation network (N1 - N14) and the BACnet tool is provided and controlled by the communication web service (CCL).

7. The method according to one of the preceding claims, wherein the communication web service (CCL) maintains a list of access rights that define which users have access to which building automation network (N1 - N14).

8. The method according to claim 7, wherein the list of access rights is managed by a web-based user interface.

9. A communication web service (CCL) for providing communication service for BACnet devices (D1 - D25) via Internet (I),
wherein the communication web service (CCL) is configured to be accessed by BACnet devices (D1 - D25) via a respective outbound HTTPS connection to a pre-defined URL, and
wherein the communication between the communication web service (CCL) and the BACnet devices (D1 - D25) is based on BACnet via a BACnet Cloud Link (BCL) protocol over a WebSocket protocol.

10. The communication web service (CCL) according to claim 9, wherein the communication web service (CCL) is hosted on one or more servers (S1 - S3) outside of the BACnet devices (D1 - D25).

11. The communication web service (CCL) according to claim 9 or claim 10, wherein the communication web service (CCL) is based on in-memory data grid frameworks and persistency frameworks.

12. The communication web service according to one of the claims 9 to 11, wherein one of the BACnet devices (D1 - D25) is a building automation BACnet device and is a node of a local building automation network (N1 - N14), and wherein said building automation BACnet device (D1 - D25) is configured to be acting as a gateway device (D8, D15, D16, D18) for further BACnet devices (D1 - D25) of the local building automation network (N1 - N14).

13. The communication web service (CCL) according to one of the claims 9 to 12,
wherein the communication web service (CCL) provides communication services for further local building automation networks (N1 - N14);
wherein in each of the local building automation networks (N1 - N14) one of the building automation BACnet devices (D1 - D25) is configured to be acting as a gateway device (D8, D10, D15, D16) for further BACnet devices (D1 - D25) of the local building automation network (N1 - N14).

14. The communication web service (CCL) according to one of the claims 9 to 13,
wherein the communication web service (CCL) is configured to be accessed by a BACnet tool via a respective outbound HTTPS connection to the pre-defined URL,
wherein the communication between the communication web service (CCL) and the BACnet tool is based on BACnet via the BACnet Cloud Link (BCL) protocol over the Websocket protocol.

15. The communication web service (CCL) according to one of the claims 9 to 14, wherein the communication between any of the building automation BACnet devices (D1 - D25) on the local building automation network (N1 - N14) and the BACnet tool is provided and controlled by the communication web service (CCL), and is based on BACnet via the BACnet Cloud Link (BCL) protocol over the Websocket protocol.

16. The communication web service according to one of the claims 9 to 15, wherein the communication web service (CCL) is configured to maintain a list of access rights that define which users have access to which building automation network (N1 - N14).

17. The communication web service according to claim 16, wherein the communication web service (CCL) provides a web-based user interface to manage the access rights by a user.

18. A Server (S1 - S3), configured to host a communication web service (CCL) for providing communication service for BACnet devices (D1 - D25) via Internet (I),
wherein the communication web service (CCL) is configured to be accessed by BACnet devices (D1 - D25) via a respective outbound HTTPS connection to a pre-defined URL, and
wherein the communication between the communication web service (CCL) and the BACnet devices (D1 - D25) is based on BACnet via the BACnet Cloud Link (BCL) protocol over a WebSocket protocol.
